# EUROPEAN PATENT SPECIFICATION

(11) **EP 1 870 989 B1**
(45) Date of publication and mention of the grant of the patent: **01.01.2014**
(21) Application number: 07108719.1
(22) Date of filing: 23.05.2007
(51) Int. Cl.: H02K 16/00, H02K 7/00, H02K 7/108

(54) **Integrated group of electric motors**
Integrierte Vorrichtung für elektrische Motoren
Groupe intégré de moteurs électriques

(30) Priority: 23.06.2006 IT PN20060053
(43) Date of publication of application: 26.12.2007
(73) Proprietor: Nidec Sole Motor Corporation S.r.l., 33170 Pordenone (IT)
(72) Inventor: Bonacina, Sergio, 22043, Galbiate (Lecco) (IT); Cossalter, Daniele, 32032, Feltre (Belluno) (IT)
(74) Representative: Gonella, Mario

(56) References cited:
- JP-A- H11 234 951
- US-A1- 2003 057 793

## Description

The present invention refers to an integrated group of two electric motors, preferably of the type involving operating modes, characteristics and ratings as generally fit for use in electric household appliances, such as clothes washing and drying machines, dishwashing machines, and the like.

Electric motors of the above-indicated kind are generally known to be mass-produced industrially on a very large scale, so that they are required to feature characteristics of great flexibility as far as both their construction and their use, i.e. installation, are concerned; and such marked flexibility must moreover be accompanied by manufacturing costs that have to be kept at as low a level as possible.

In particular, as far as condenser-type clothes drying machines are concerned, the need is generally known to exist for driving means to be available for use, which are adapted to not only rotatably drive the drum holding the clothes to be dried, but also the two fans that are used to generate the two flows of drying air and condenser-cooling air, respectively.

Traditionally, a solution is generally adopted, according to which use is made of two distinct electric motors, i.e. a motor to rotatably drive the clothes-holding drum and a separate motor to drive said two fans.

Such solution, although quite effective from a functional point of view, has however turned out as being quite expensive from a construction point of view, owing basically to the need for two distinct asynchronous or induction - i.e. inherently quite expensive - electric motors to be provided to operate a single and same machine.

Furthermore, mounting said two distinct motors inside a household-type clothes drying machine of a standard kind gives rise to a number of substantial installation problems, since such two motors are rather bulky in their construction and, as a result, the generally scanty space that is available to such purpose inside appliances of this kind has in all cases to be used up to an extreme degree.

In view of overcoming these drawbacks of a practical nature, a known practice lies in using a single electric motor, to which there are then associated both the drive pulleys of the two distinct fans and the drive pulleys of the drum.

While very effective from purely construction-related point of view, this solution has however some drawbacks that are not surmountable from a functional, i.e. operation-related point of view, i.e.:
a) in the first place, the rotational speeds of the two fans and the drum become rigidly correlated with each other owing to the rigid mechanical connection linking such parts together; as a result, since the rotational speed of the drum (approx. 55 rpm) must be kept substantially constant, it necessarily ensues that even the flow rates of the air streams through the drying-air and condenser-cooling conduits become constant, wherein it would on the contrary be quite appropriate and advantageous for such flow rates to be able to be varied - even to quite considerable an extent - as the drying cycle progresses, depending on and during the various process phases being performed, actually;
b) moreover, during the short periods when the direction of rotation of the drum has to be reversed, the driving motor has to first come to a stop, so that even the air flows in the drying and cooling conduits are of course interrupted; owing to safety reasons, which are largely known to all those skilled in the art, even the electric heating elements used to heat up the drying air have to be switched off during such reversal periods, and such need practically implies a number of additional construction-related complications, whereby the overall reliability of the machine unavoidably suffers a downgrade, owing mainly to the need for current at line voltage to be frequently switched on and off throughout the entire drying cycle.

Known from the disclosure in JP 11234951 (CONCENTRIC MULTIPLE-SHAFT MOTOR) is an aggregate of two electric motors having two respective shafts rotating at different speeds; such two motors are coaxial with each other and one of the two shafts is hollow, thereby enabling the shaft of the other electric motor to extend longitudinally through said hollow shaft, so that the possibility is given for two different rotating loads - as shrink-fitted on to the two coaxial, but distinct shafts - to be appropriately driven.

The advantage deriving from such solution is essentially construction-related, considering the significant reduction in costs and installation space requirements that can be obtained in this way.

Such solution, however, just cannot be practically implemented in a condenser-type clothes drying machine to any useful effect. In a machine of this kind, in fact, there are as many as three loads that have to be driven for operation, namely the two fans used in the circuits for the circulation of the hot drying air and the condenser cooling air, respectively, as well as the rotating drum.

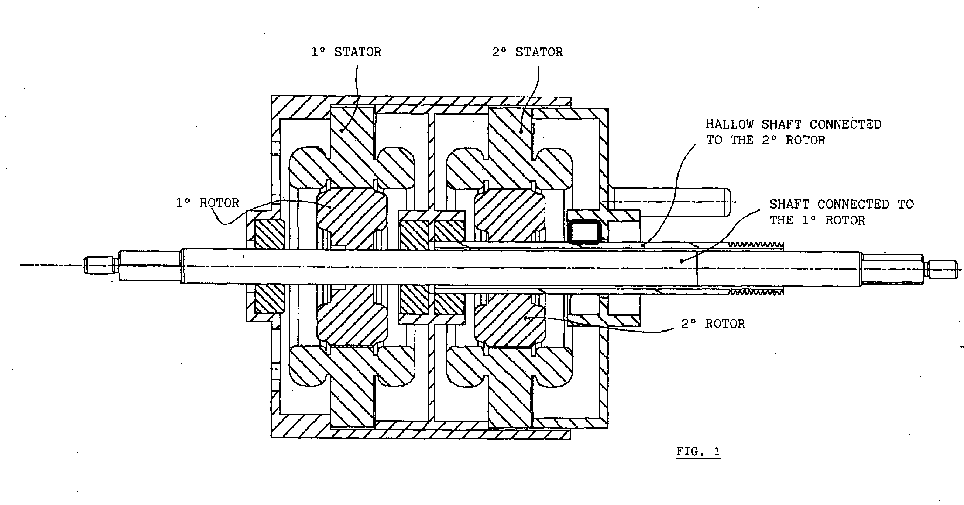

In view of overcoming this problem, and with particular reference to the illustration appearing in Figure 1, the possibility has been considered of providing a group of electric motors, in which a first shaft, which is arranged to rotate inside a second hollow shaft, is provided with two end portions that are both accessible from outside; each one of these two end portions is therefore capable of being used to operate, i.e. drive a respective one of said two fans, whereas the second hollow shaft is used to rotatably drive the drum.

Such solution would however scarcely prove an optimum one, since it implies that the two fans would have to operate in a synchronous manner in any moment throughout the drying cycle, even if during some particular phase of the drying process, such as for instance during the initial phase, it would certainly be most appropriate and advantageous - for obvious energy-saving and noise-reduction reasons - for the fan associated to the condenser-cooling air circuit to be able to be stopped, i.e. switched off, whereas the other fan is of course allowed to keep operating.

It would therefore be desirable, and it is actually a main purpose of the present invention, to provide an integrated group of two coaxial electric motors comprising:
- a first electric motor adapted to rotatably operate a respective first shaft that is provided with two end portions on the opposite sides of said first motor;
- a second electric motor arranged between said first electric motor and an end portion of said first shaft, wherein said second electric motor is provided with a respective second hollow shaft inside which there is accommodated said first shaft, said second hollow shaft being situated - relative to the respective second motor - on the side lying opposite to the one on which there is located said first motor.

According to the present invention, said first shaft is formed of two sections that are adapted to be connected to each other by a mechanical coupling means that is in turn adapted to selectively couple said two sections with each other and/or uncouple said two sections from each other.

Another primary purpose of the present invention is to provide a condenser-type clothes drying machine, which is adapted to operate in a selectively controllable manner as far as both the rotating speed and direction of the drum and the rotating speed and, as a result, the flow rate of the two drying-air and cooling-air fans are concerned, wherein such clothes drying machine must anyway be able to be provided in a way that does away with the typical drawbacks of prior-art solutions, which make use of two rather bulky motors that generally occupy two distinct and rather large spaces within the machine.

According to the present invention, these aims, along with further ones that will become apparent from the following disclosure, are reached in a particular arrangement of an integrated group of electric motors, as well as an improved kind of clothes drying machine provided with two motors for rotatably driving the drum and the two fans associated to the respective drying-air and condenser-cooling air conduits, respectively, both of them incorporating the features and characteristics as defined and recited in the appended claims.

Advantages and features of the present invention will anyway be more readily understood from the description that is given below by way of non-limiting example with reference to the accompanying drawings, in which:
- Figure 2 is a median cross-sectional view across the common axis of two electric motors and the related mechanical connections in an integrated group of electric motors according to the present invention;
- Figure 3 is an exploded view of the most significant parts making up the motors and the integrated group shown in Figure 2;
- Figure 4 is a symbolic representation of the drum and the most important functional circuits of a clothes drying machine according to the prior art;
- Figure 5 is a schematic view of the drum and the two distinct drying-air and condenser-cooling air circuits, along with the drum rotation driving circuit, in a clothes drying machine provided with an integrated group of electric motors according to the present invention.

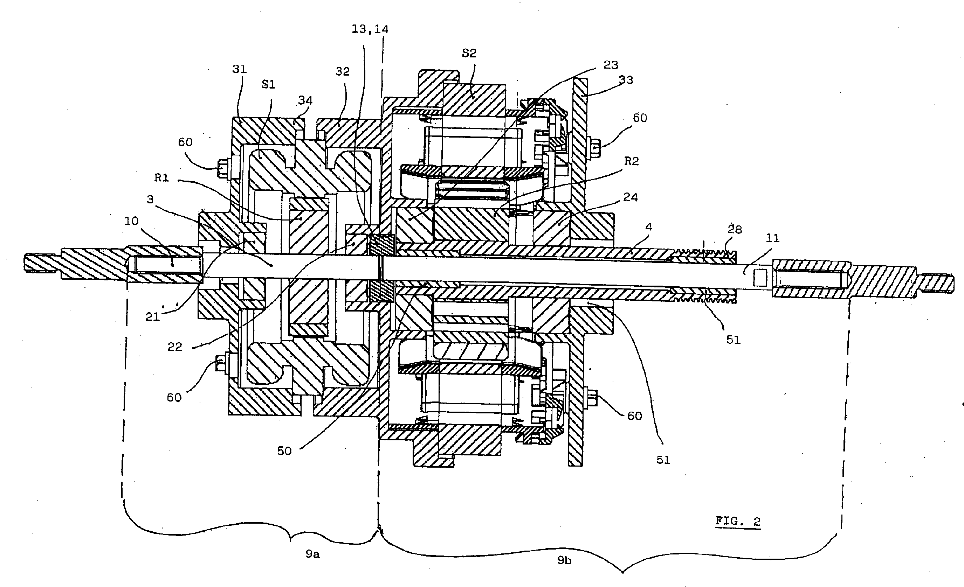

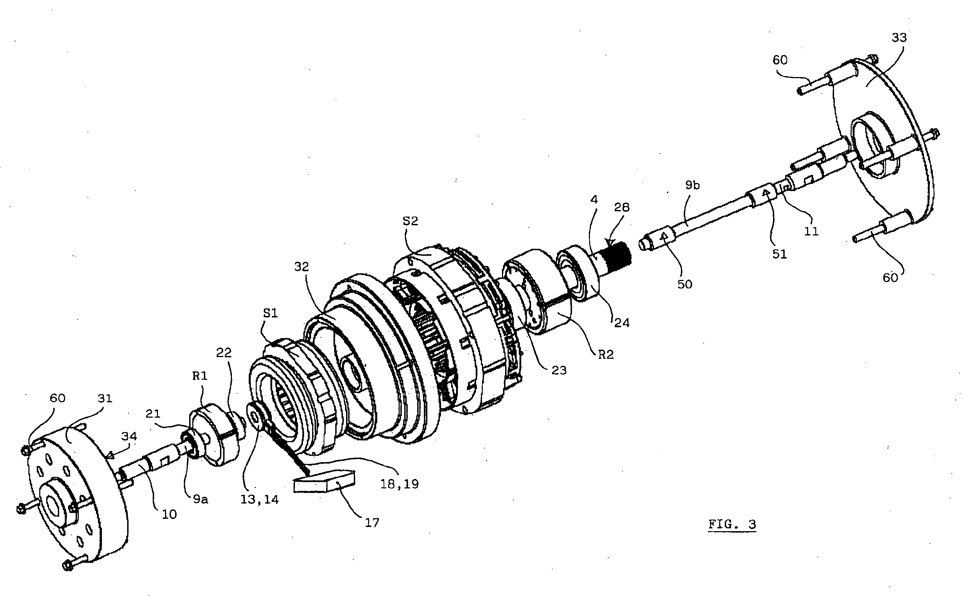

With reference to Figures 2 and 3, the integrated group of electric motors comprises:
- two electric motors 1, 2 provided in a coaxial arrangement relative to each other, wherein a first electric motor 1 is adapted to rotatably operate a respective first shaft 3 extending through said first motor 1 and featuring two end portions 10, 11 that are situated on the opposite sides of said first motor,
- and wherein the second electric motor 2 is situated between said first motor 1 and an end portion 11 of said first shaft 3, said second motor 2 being provided with a respective second shaft 4 provided in the form of a hollow cylinder and so sized as to be able to accommodate said first shaft 3 thereinside.

These two shafts are not engaging each other, i.e. they are not in contact with each other, so that each shaft is able to rotate independently of the other one.

Even if said two motors are controlled independently of each other, and even if one of said two shafts, preferably the through-passing shaft 3 of the motor 1, is connected at the two end portions 10, 11 thereof to two different loads, e.g. the two fans of a condenser-type clothes drying machine, it however can be most readily appreciated that such two loads are driven in a rigid manner, so that it is simply not possible for any of said two loads to be driven in an even partial manner.

In view of overcoming this problem, the present invention teaches a solution in which said first shaft 1 is separated into two distinct sections, i.e. a first section 9a and a second section 9b, whereas a selectively operable mechanical coupling means 13 is arranged between such sections.

For this mechanical coupling means 13 to be able to be operated selectively, various options are available. In this connection, a first possibility is to control said mechanical coupling means 13 - which for the matter may be an axial coupler of any type largely known as such in the art, e.g. a clutch-type coupler, so that it does not require any further explanation, actually - by means of an electromagnetic actuator 14, which is shown as being integrated in the same mechanical coupling means 13 in the Figure.

This electromagnetic actuator 14 must be capable of being connected electrically on the outside of the integrated coupling itself via two appropriate lead wires 18, 19 so that, when an appropriate electric signal is sent to this actuator by a control means, which is symbolically indicated at 17 in the Figure, the same actuator is suitably operated to thereby cause said mechanical coupling means 13 to be selectively connected or disconnected and, as a result, said two sections of the first shaft to be selectively coupled or uncoupled.

An alternative option lies in providing said mechanical coupling means 13 in the form or with the aid of a special mono-directional bearing adapted to:
- connect said two shaft sections when the section 9a - owing to its being associated to the rotor R1 of said first motor 1 - is operated, i.e. driven to rotate in a given, pre-determined direction of rotation, and
- disconnect said two shaft sections when the section 9a is on the contrary operated, i.e. driven to rotate in the opposite direction of rotation.

Such bearing may be selected among a number of appropriate gears available to such purpose, which are generally known in the art as "free-wheel" gears, such as for instance the ones that are supplied by the Milan-based company Gerit Trasmissioni S.p.A. (www.gerit.it).

The practical advantage deriving from the use of this second alternative option lies not only in the lower costs involved by it, but also in its greater simplicity altogether. A gear like this one can most advantageously be used in all those applications or operating phases of a process, especially a clothes drying process, in which the two above-mentioned shaft sections are required to be only connected with each other when the shaft is rotating in a pre-established direction of rotation.

Such feature is for instance quite useful in a condenser-type clothes drying machine, when - in the initial phase of the drying process - the sole fan associated to the hot drying air conduit should desirably be allowed to operate, whereas the fan associated to the condenser cooling air conduit should on the contrary be kept inoperative, since the condenser does not require to be cooled yet. In fact, by causing said driving shaft 3 to rotate in the appropriate direction, only the section 9a thereof and, as a result, only the fan associated to the hot drying air conduit would be driven rotatably and, thus, allowed to operate, thereby ensuring not only a beneficial energy saving effect, but also a quieter operation of the machine.

The present invention as described above may be practically embodied in a number of different and advantageous manners:
- in fact, one of said two shaft sections, e.g. the section 9a, supports the related rotor R1 of the first motor and must therefore be itself supported by two bearings 21 and 22, which do not however allow said mechanical coupling means 13 to be positioned between them, since said rotor R1 would otherwise be no longer supported in a correct and effective manner when said means 13 causes said two shaft sections to uncouple from each other.

As a result, said mechanical coupling means 13 must therefore be positioned on the outside of said bearing 22, relative to said rotor R1, while it must of course be also situated on the outside of the two bearings 23 and 24 that support the rotor R2 of the motor 2, since the two motors are simply juxtaposed in a side-by-side arrangement.

Said mechanical coupling means 13 can therefore be positioned between those two bearings of the two motors, which lie closest to each other. Practically, it is installed between the bearing 22 of the first motor and the neighbouring bearing 23 of the second motor.

As far as the "outer" section 9b is concerned, which - as it has already been noted hereinbefore - is partially fitted into the second shaft 4, it must on the one hand be of course properly supported, but - on the other hand - it must also be such as to be able to slide smoothly relative to said second shaft 4. To this purpose, one or, preferably, two bushes, journal bearings or glands 50, 51 or, anyway, appropriate separating means adapted to allow the thus separated surfaces to smoothly slide relative to each other. As illustrated in Figures 2 and 3, in an advantageous manner said bushes are provided at the ends of the second shaft 4, thereby ensuring a maximum extent of concentricity and separation of the section 9b and the shaft 4 relative to each other.

Accordingly, with reference to Figure 3, the sequence in which the various above-cited parts and members follow each other in the inventive arrangement being described, starting from the end portion 10 of said first shaft section 9a that is adapted to engage said mechanical coupling means 13 and moving on towards the terminal portion 11 at the end of the second shaft section 9b, is as follows:
- first shaft section 9a,
- bearing 21 associated to such first shaft section,
- rotor R1 of the first motor 1,
- opposite bearing 22 of the same first section,
- mechanical coupling means 13,
- second shaft section 9b,
- bearing 23 associated to the second shaft 4,
- second shaft 4,
- first bush 50 between the second shaft section 9b and the second shaft 4,
- rotor R2 of the second motor 2,
- opposite bearing 24 of the second shaft 4,
- second bush 51 between the second shaft section 9b and the second shaft 4,
- terminal portion 28 of the second shaft 4,
- terminal portion 11 of the second shaft section 9b.

As far as the physical structure of this particular embodiment of the integrated motor group is concerned, it can be readily appreciated that it can be built in a number of different ways, i.e. around an internal frame, within an outer casing or both ways. However, and with particular reference to Figures 2 and 3, in view of improving and facilitating assembly, as well as reducing material, assembly and installation costs, such integrated motor group may be provided so as to include a support structure comprising three distinct shields 31, 32, 33 spaced from each other and arranged in a sequence along the axis of said motors.

In particular, the middle shield 32 forms the bearing structure for the whole integrated motor group being described and, for this reason, the need arises for both the two motors and the other two shields to be linked with, i.e. engage such middle shield. To this purpose, in the inner portion thereof this middle shield 32 accommodates and supports at least a bearing 22 of the first motor and a bearing 23 of the second motor, as well as said mechanical coupling means 13.

In addition, at the outer portion thereof the same middle shield 32 at least partially engages - via linking means that are largely known as such in the art - the stators of the respective motors, said stators being by the way indicated in the Figures with the numerals S1 and S2.

The two outer shields 31 and 33 are provided at the opposite end portions of said integrated motor group, wherein each one of them is applied to and sustains an outer side of a respective motor.

For the construction of the whole integrated motor group to be further consolidated, such outer shields 31 and 33 are in turn linked with and secured to said middle shield 32 with the aid of tension-type fastening means 60, such as screws, bolts, tie-rods or the like, extending on the outside of the stators of the two motors.

Furthermore, the outer bearings 21 and 24 of the two motors are in turn linked with and secured to a respective one of said outer shields 31 and 34.

The desired result is in this way obtained of ensuring an easy, but anyway sure and safe consolidation of the integrated motor group, since the middle shield, which also acts as a support frame, directly supports the inner or contiguous bearings 22 and 23 of the two motors in its interior, whereas the outer bearings 21 and 24 of the two motors are supported by the respective shields 31 and 33, which are in turn capable of being easily, but effectively joined to said middle shield 32 in a firm and stable manner.

Such construction structure may on the other hand be further improved and consolidated by providing at least one of said outer shields, e.g. the shield 31, in the form of a pan-shaped or cup-shaped structure, so that it is adapted to receive and accommodate a portion of the respective stator S1 in its interior. This improvement in the embodiment of the inventive integrated motor group is effective in bringing about a twofold advantage, in that it both ensures a more effective protection of the respective stator from the outside and enables the parts to be connected between the annular edge 34 of said shield 31 and the middle shield 32 to be brought nearer to each other, thereby improving the ultimate strength and solidity of the whole construction.

These results are particularly magnified when said two motors 1 and 2 are of the permanent-magnet motors, which are largely known to be particularly compact and involve particularly low space requirements as compared with traditionally used motors, i.e. a feature that is much valued in the case that such motors have to be installed inside household appliances.

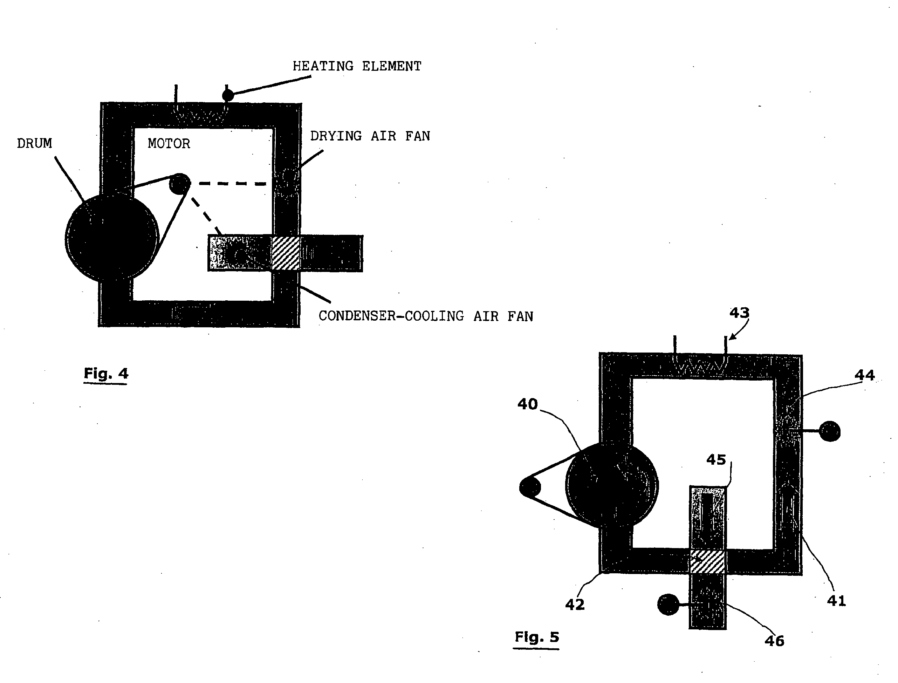

With reference to Figures 4 and 5, a clothes drying machine according to the present invention comprises a rotating drum 40, a first drying-air conduit 41 for a hot air flow to be circulated through said rotating drum and be eventually exhausted therefrom to be conveyed through a condenser 42, from which said flow of air is then let anew into said drum 40 upon being appropriately heated up again by means of heating elements 43, a first fan 44 that is instrumental in causing said flow of drying air to be circulated through said first conduit 41, a second conduit 45 that takes in cooling air from the outside ambient and causes it to be conveyed - by means of an appropriate second fan 46 - into and through said condenser 42, from which said flow of cooling air is exhausted again into the outside ambient.

For these two fans to be able to be rotatably driven not only in a synchronized manner, but also at properly correlated speeds, each one of them is connected, either directly or via driving belts or similar means largely known as such in the art, to a respective one of said two shaft sections 9a and 9b, whereas the rotating drum 40 is in turn connected - again via means that are largely known as such in the art - to said second shaft 4.

In this way, said two motors included in the inventive integrated group can be controlled and driven to rotate in a manner that is fully independent of each other. This of course enables:
- the rotational speed of said two fans to be varied fully independently of the rotational speed of the drum,
- the rotating drum to be driven to rotate in both opposite directions of rotation thereof, also while keeping the fans rotating unvaryingly in the same direction; it can therefore be readily appreciated that, in this way, the possibility is given for the direction of rotation of the drum to be reversed without having to cut off the power supply to the heating elements, since the stream of both drying and cooling air can in fact keep flowing on in an independent manner; this solution practically enables a second result of the present invention to be achieved,
- and, in particular, the drum of the clothes drying machine to be driven and operated independently of the fan 44 associated to the hot drying air conduit 41, whereas the fan 46 associated to the cooling air conduit 45 is simply stopped, when needed or desired, by either disconnecting said mechanical coupling means 13, if the latter operates on the basis of an electromagnetic actuator, or causing it to rotate in a definite direction if it uses a mono-directional bearing 15.

It will of course be also possible and/or advantageous, depending also on the physical configuration of the various members and parts of the machine and the positioning thereof, for the two fans 44 and 46 to be on the contrary fitted, e.g. shrink-fitted directly on to said two shaft sections 9a and 9b; however, this may be considered as being a technical equivalent so that it has no relevance as far as the scope of the present invention is concerned.

A particularly advantageous improvement of the present invention lies in providing the above-cited clothes drying machine with appropriate control means (not shown in the Figures, owing to them being largely known as such in the art), which are adapted to act on said two motors in an independent manner.

It may therefore be quite readily appreciated that combining some of the aforedescribed features with each other, and in particular combining:
- a single and sole support structure,
- two permanent-magnet motors supported within said structure,
- the coaxial arrangement of said two motors enabling them to be mounted inside said single and sole structure,
- the provision of one of said motors in the shape of a hollow cylinder that enables a motor shaft to pass through the other motor shaft, so that said two motors can be mounted in a juxtaposed, i.e. side-by-side arrangement, thereby requiring and taking up just a minimum of mounting space inside the machine,
- the separation of the inner motor shaft into two distinct sections that can be coupled to or uncoupled from each other selectively,
   makes it possible to provide a clothes drying machine that is optimized as far as both the size, i.e. the space requirements of the two internal motors and the overall operating flexibility are concerned. In particular, by having said mechanical coupling means 13 provided accordingly, the possibility arises for a third virtual motor to be practically implemented, which enables the fan 46 associated to the condenser cooling conduit 45 to be controlled and driven selectively.

## Claims

1. Integrated group of two substantially coaxial electric motors, comprising:
- a first electric motor (1) adapted to rotatably drive a related first shaft (3) being provided with two end portions, of which one (10) is situated on a side of said motor and the other one (11) on the opposite sides thereof,
- and a second electric motor (2) that is arranged between said first electric motor (1) and an end portion (28) of said first shaft (3), and is provided with a respective second shaft (4) in the form of a hollow cylindrical sleeve, inside which there is accommodated said first shaft,
- said second hollow shaft (4) being located - relative to said second motor (2) - on the side lying opposite to the one on which there is situated said first motor (1),
**characterized in that**:
- said first shaft (3) is formed of two distinct sections (9a, 9b),
- a mechanical coupling means (13) is included between said two shaft sections,
- and said mechanical coupling means (13) is adapted to selectively couple said two sections (9a, 9b) with each other and/or selectively uncouple said two sections (9a, 9b) from each other.

2. Integrated group of two electric motors according to claim 1, **characterized in that**:
- said mechanical coupling means (13) is provided in a position between said first motor and said second motor,
- the first one (9a) of said two shaft sections is secured to the rotor (R1) of said first motor, and
- said mechanical coupling means (13) is adapted to automatically connect said two shaft sections (9a, 9b) with each other when said first motor (1) rotates in a pre-determined direction of rotation, and to automatically disconnect said two shaft sections from each other when said first motor rotates in the opposite direction.

3. Integrated group of two electric motors according to claim 1, **characterized in that**:
- said mechanical coupling means (13) is provided in a position between said first motor and said second motor,
- the first one (9a) of said two shaft sections is secured to the rotor (R1) of said first motor (1),
- to said mechanical coupling means there is associated an electromechanical actuator (14),
- which is adapted to connect said two sections with each other, or disconnect them from each other, when a corresponding electric signal is sent to said electromechanical actuator.

4. Integrated group of two electric motors according to claim 2 or 3, **characterized in that** said first motor is provided with at least a first bearing (22) that is fitted on to said first shaft section (9a), **in that** said second motor is provided with at least a respective second bearing (23) that is fitted on to said second shaft (4), and **in that** said mechanical coupling means is positioned between said first and second bearings (22, 23).

5. Integrated group of two electric motors according to any of the preceding claims 2 to 4, **characterized in that** said second shaft section (9b) extends and passes through the interior of said second hollow shaft (4), and **in that** between the inner surface of said hollow shaft (4) and said second section (9b) of said first shaft there is provided at least a sliding support member (50, 51) adapted to enable them to slide relative to each other, such as a grommet, a bush or the like.

6. Integrated group of two electric motors according to any of the preceding claims, **characterized in that** said two motors (1, 2) are supported and linked with each other by a support structure provided thereoutside, **in that** said support structure is substantially formed of three distinct shields (31, 32, 33) separated from each other and arranged in the axial direction, and **in that** the middle shield (32) is adapted to support at least a bearing (22) of said first shaft section (9a) and at least a bearing (23) of said second hollow shaft (4).

7. Integrated group of two electric motors according to claim 6, **characterized in that** the two side shields (31, 33) are rigidly connected to said middle shield (32) by means of tension-type fastening means (60), such as preferably tie-rods, bolts or screws extending outside the stators of the respective motors.

8. Integrated group of two electric motors according to claim 6 or 7, **characterized in that** at least the stator (S1) of a motor (1) is substantially protected from the outside by a cylindrical, cup-shaped configuration of the respective annular edge (34) of the respective side shield (31).

9. Integrated group of two electric motors according to any of the preceding claims, **characterized in that** said electric motors (1, 2) are permanent-magnet motors.

10. Condenser-type clothes drying machine, either of the front-loading or the top-loading kind, comprising:
- a rotating drum (40),
- a first drying-air conduit (41) for a first hot air flow to be circulated in a closed-loop pattern through said rotating drum and through an appropriate condenser (42),
- a first fan (44) that is adapted to cause said flow of hot drying air to be circulated through said first conduit (41),
- a second conduit (45) that is adapted to circulate a second flow of ambient or cooled air through said condenser (42),
- a second fan (46) that is adapted to cause said second flow of cooling air to be circulated through said second conduit,
- said first and second fans and said rotating drum (40) being driven rotatably by appropriate driving means,
**characterized in that**:
- said driving means comprise an integrated group of two motors (1, 2) according to at least one of the preceding claims.

11. Condenser-type clothes drying machine according to claim 10, **characterized in that** each one of said two sections (9a, 9b) of said first shaft is connected to a respective one of said first and second fans (44, 46), and **in that** said second hollow shaft (4) is connected to means adapted to rotatably drive said rotating drum (40).

12. Condenser-type clothes drying machine according to any of the preceding claims, **characterized in that** it is provided with control means adapted to control said two electric motor (1, 2) and said electromagnetic actuator (14) - when used - fully independently of each other.

13. Condenser-type clothes drying machine according to claim 12, **characterized in that**:
- said second shaft section (9b) is connected to said second fan (46),
- and said control means are adapted to cause said first motor (1) to rotate, or to operate said electromagnetic actuator (14), as the case may be, in such manner as to cause said second shaft section (9b) to uncouple from said first shaft section (9a) during at least the initial phase of the clothes drying process.

## Patentansprüche

1. Integrierte Gruppe von zwei im Wesentlichen koaxialen Elektromotoren, die umfasst einen ersten Elektromotor (1), der ausgebildet ist, um eine zugehörige erste Welle (3) mit zwei Endteilen drehend anzutreiben, von denen einer (10) auf einer Seite des Motors angeordnet ist und der andere (11) auf der gegenüberliegenden Seite angeordnet ist, und einen zweiten Elektromotor (2), der zwischen dem ersten Elektromotor (1) und einem Endteil (28) der ersten Welle (3) angeordnet ist und mit einer entsprechenden zweiten Welle (4) in der Form einer hohlen, zylindrischen Hülse versehen ist, in deren Innerem die erste Welle aufgenommen ist,
wobei die zweite hohle Welle (4) relativ zu dem zweiten Motor (2) auf der zu dem ersten Motor (1) gegenüberliegenden Seite angeordnet ist,
**dadurch gekennzeichnet, dass**
die erste Welle (3) aus zwei distinkten Abschnitten (9a, 9b) ausgebildet ist,
eine mechanische Kopplungseinrichtung (13) zwischen den zwei Wellenabschnitten enthalten ist, und
die mechanische Kopplungseinrichtung (13) ausgebildet ist, um wahlweise die zwei Abschnitte (9a, 9b) miteinander zu koppeln und/oder wahlweise die zwei Abschnitte (9a, 9b) voneinander zu entkoppeln.

2. Integrierte Gruppe von zwei Elektromotoren nach Anspruch 1, **dadurch gekennzeichnet, dass**:
die mechanische Kopplungseinrichtung (13) an einer Position zwischen dem ersten Motor und dem zweiten Motor vorgesehen ist,
der erste (9a) der zwei Wellenabschnitte an dem Läufer (R1) des ersten Motors befestigt ist, und
die mechanische Kopplungseinrichtung (13) ausgebildet ist, um die zwei Wellenabschnitte (9a, 9b) automatisch miteinander zu verbinden, wenn sich der erste Motor (1) in einer vorbestimmten Drehrichtung dreht, und die zwei Wellenabschnitte automatisch voneinander zu trennen, wenn sich der erste Motor in der umgekehrten Richtung dreht.

3. Integrierte Gruppe von zwei Elektromotoren nach Anspruch 1, **dadurch gekennzeichnet, dass**:
die mechanische Kopplungseinrichtung (13) an einer Position zwischen dem ersten Motor und dem zweiten Motor vorgesehen ist,
der erste (9a) der zwei Wellenabschnitte an dem Läufer (R1) des ersten Motors (1) befestigt ist,
mit der mechanischen Kopplungseinrichtung ein elektromechanisches Stellglied (14) assoziiert ist, das ausgebildet ist, um die zwei Abschnitte miteinander zu verbinden oder voneinander zu trennen, wenn ein entsprechendes elektrisches Signal an das elektromechanische Stellglied gesendet wird.

4. Integrierte Gruppe von zwei Elektromotoren nach Anspruch 2 oder 3, **dadurch gekennzeichnet, dass** der erste Motor mit wenigstens einem ersten Lager (22) versehen ist, das auf den ersten Wellenabschnitt (9a) gepasst ist, dass der zweite Motor mit wenigstens einem entsprechenden zweiten Lager (23) versehen ist, das auf die zweite Welle (4) gepasst ist, und dass die mechanische Kopplungseinrichtung zwischen den ersten und zweiten Lagern (22, 23) angeordnet ist.

5. Integrierte Gruppe von zwei Elektromotoren nach einem der vorstehenden Ansprüche 2 bis 4, **dadurch gekennzeichnet, dass** sich der zweite Wellenabschnitt (9b) durch das Innere der zweiten hohlen Welle (4) erstreckt und dass zwischen der Innenfläche der hohlen Welle (4) und dem zweiten Abschnitt (9b) der ersten Welle wenigstens ein gleitendes Halteglied (50, 51) wie etwa eine Tülle, eine Muffe oder ähnliches vorgesehen ist, das ausgebildet ist, um ein relatives Gleiten zwischen denselben zu ermöglichen.

6. Integrierte Gruppe von zwei Elektromotoren nach einem der vorstehenden Ansprüche, **dadurch gekennzeichnet, dass** die zwei Motoren (1, 2) durch einen außerhalb vorgesehenen Halteaufbau gehalten und miteinander verbunden werden, wobei der Halteaufbau im Wesentlichen aus drei distinkten Halteteilen (31, 32, 33) gebildet wird, die separat zueinander in der Axialrichtung angeordnet sind, wobei der mittlere Halteteil (32) ausgebildet ist, um wenigstens ein Lager (22) des ersten Wellenabschnitts (9a) und wenigstens ein Lager (23) der zweiten hohlen Welle (4) zu halten.

7. Integrierte Gruppe von zwei Elektromotoren nach Anspruch 6, **dadurch gekennzeichnet, dass** die zwei seitlichen Halteteile (31, 33) starr über eine Befestigungseinrichtung (60) des Zugtyps wie etwa vorzugsweise Zugstangen, Bolzen oder Schrauben, die sich außerhalb der Ständer der entsprechenden Motoren erstrecken, mit dem mittleren Halteteil (32) verbunden sind.

8. Integrierte Gruppe von zwei Elektromotoren nach Anspruch 6 oder 7, **dadurch gekennzeichnet, dass** wenigstens der Ständer (S1) eines Motors (1) im Wesentlichen von außen durch eine zylindrische, napfförmige Konfiguration der entsprechenden ringförmigen Kante (34) des entsprechenden seitlichen Halteteils (31) geschützt wird.

9. Integrierte Gruppe von zwei Elektromotoren nach einem der vorstehenden Ansprüche, **dadurch gekennzeichnet, dass** die Elektromotoren (1, 2) Permanentmagnetmotoren sind.

10. Wäschetrockenmaschine des Kondensatortyps, die entweder als ein Frontlader oder als ein Toplader ausgebildet ist und umfasst:
eine Drehtrommel (40),
eine erste Trockenluftleitung (41) für einen ersten Fluss heißer Trockenluff für eine Zirkulation in einem geschlossenen Kreislauf durch die Drehtrommel und durch einen entsprechenden Kondensator (42),
einen ersten Ventilator (44), der ausgebildet ist, um den Fluss heißer Trockenluft für die Zirkulation durch die erste Leitung (41) zu erzeugen,
eine zweite Leitung (45), die ausgebildet ist, um einen zweiten Fluss aus Umgebungsluft oder gekühlter Luft durch den Kondensator (42) zirkulieren zu lassen, und
einen zweiten Ventilator (46), der ausgebildet ist, um den zweiten Fluss gekühlter Luft für die Zirkulation durch die zweite Leitung zu erzeugen,
wobei die ersten und zweiten Ventilatoren und die Drehtrommel (40) durch eine entsprechende Antriebseinrichtung drehend angetrieben werden,
**dadurch gekennzeichnet, dass**:
die Antriebseinrichtung eine integrierte Gruppe von zwei Motoren (1, 2) gemäß wenigstens einem der vorstehenden Ansprüche umfasst.

11. Wäschetrockenmaschine des Kondensatortyps nach Anspruch 10, **dadurch gekennzeichnet, dass** jeder der zwei Abschnitte (9a, 9b) der ersten Welle mit einem entsprechenden der ersten und zweiten Ventilatoren (44, 46) verbunden ist und dass die zweite hohle Welle (4) mit einer Einrichtung verbunden ist, die ausgebildet ist, um die Drehtrommel (40) drehend anzutreiben.

12. Wäschetrockenmaschine des Kondensatortyps nach einem der vorstehenden Ansprüche, weiterhin **gekennzeichnet durch** eine Steuereinrichtung, die ausgebildet ist, um die zwei Elektromotoren (1, 2) und das elektromagnetische Stellglied (14), sofern dieses verwendet wird, vollständig unabhängig voneinander zu steuern.

13. Wäschetrockenmaschine des Kondensatortyps nach Anspruch 12, **dadurch gekennzeichnet, dass**:
der zweite Wellenabschnitt (9b) mit dem zweiten Ventilator (46) verbunden ist,
und die Steuereinrichtung ausgebildet ist, um eine Drehung des ersten Motors (1) zu veranlassen oder um ggf. das elektromagnetische Stellglied (14) zu betreiben, sodass eine Entkopplung des zweiten Wellenabschnitts (9b) von dem ersten Wellenabschnitt (9a) während wenigstens der Anfangsphase des Wäschetrockenprozesses veranlasst wird.

## Revendications

1. Groupe intégré de deux moteurs électriques sensiblement coaxiaux, comprenant :
- un premier moteur électrique (1) adapté pour entraîner en rotation un premier arbre associé (3) doté de deux portions d'extrémité, dont l'une (10) est située d'un côté dudit moteur et l'autre (11) du côté opposé de celui-ci,
- et un deuxième moteur électrique (2) qui est disposé entre ledit premier moteur électrique (1) et une portion d'extrémité (28) dudit premier arbre (3), et qui est doté d'un deuxième arbre respectif (4) se présentant sous la forme d'un manchon cylindrique creux, à l'intérieur duquel est logé ledit premier arbre,
- ledit deuxième arbre creux (4) étant situé, par rapport audit deuxième moteur (2), du côté opposé au côté où est situé ledit premier moteur (1),
**caractérisé en ce que** :
- ledit premier arbre (3) est constitué de deux sections distinctes (9a, 9b),
- un moyen d'accouplement mécanique (13) est inclus entre lesdites deux sections d'arbre,
- et ledit moyen d'accouplement mécanique (13) est adapté pour accoupler sélectivement lesdites deux sections (9a, 9b) l'une avec l'autre et/ou désaccoupler sélectivement lesdites deux sections (9a, 9b) l'une de l'autre.

2. Groupe intégré de deux moteurs électriques selon la revendication 1, **caractérisé en ce que** :
- ledit moyen d'accouplement mécanique (13) est placé dans une position entre ledit premier moteur et ledit deuxième moteur,
- la première (9a) desdites deux sections d'arbre est fixée au rotor (R1) dudit premier moteur, et
- ledit moyen d'accouplement mécanique (13) est adapté pour raccorder automatiquement lesdites deux sections d'arbre (9a, 9b) l'une à l'autre lorsque ledit premier moteur (1) tourne dans un sens de rotation prédéterminé, et pour désolidariser automatiquement lesdites deux sections d'arbre l'une de l'autre lorsque ledit premier moteur tourne dans le sens opposé.

3. Groupe intégré de deux moteurs électriques selon la revendication 1, **caractérisé en ce que** :
- ledit moyen d'accouplement mécanique (13) est placé dans une position entre ledit premier moteur et ledit deuxième moteur,
- la première (9a) desdites deux sections d'arbre est fixée au rotor (R1) dudit premier moteur (1),
- audit moyen d'accouplement mécanique est associé un actionneur électromécanique (14),
- qui est adapté pour raccorder lesdites deux sections l'une à l'autre, ou les désolidariser l'une de l'autre, lorsqu'un signal électrique correspondant est envoyé audit actionneur électromécanique.

4. Groupe intégré de deux moteurs électriques selon la revendication 2 ou 3, **caractérisé en ce que** ledit premier moteur est équipé d'au moins un premier palier (22) qui est monté sur ladite première section d'arbre (9a), **en ce que** ledit deuxième moteur est équipé d'au moins un deuxième palier respectif (23) qui est monté sur ledit deuxième arbre (4), et **en ce que** ledit moyen d'accouplement mécanique est positionné entre lesdits premier et deuxième paliers (22, 23).

5. Groupe intégré de deux moteurs électriques selon l'une quelconque des revendications précédentes 2 à 4, **caractérisé en ce que** ladite deuxième section d'arbre (9b) s'étend et passe à travers l'intérieur dudit deuxième arbre creux (4), et **en ce que** entre la surface intérieure dudit arbre creux (4) et de ladite deuxième section (9b) dudit premier arbre est placé au moins un élément favorisant le coulissement (50, 51) adapté pour leur permettre de coulisser l'un par rapport à l'autre, tel qu'un oeillet, une douille ou analogue.

6. Groupe intégré de deux moteurs électriques selon l'une quelconque des revendications précédentes, **caractérisé en ce que** lesdits deux moteurs (1, 2) sont supportés et reliés l'un à l'autre par une structure de support du côté extérieur, **en ce que** ladite structure de support est sensiblement constituée de trois éléments de protection distincts (31, 32, 33) séparés les uns des autres et disposés dans la direction axiale, et **en ce que** l'élément de protection du milieu (32) est adapté pour supporter au moins un palier (22) de ladite première section d'arbre (9a) et au moins un palier (23) audit deuxième arbre creux (4).

7. Groupe intégré de deux moteurs électriques selon la revendication 6, **caractérisé en ce que** les deux éléments de protection latéraux (31, 33) sont raccordés rigidement audit élément de protection du milieu (32) à l'aide de moyens de fixation (60) de type à tension, tels que de préférence des tirants, des boulons ou des vis s'étendant à l'extérieur des stators des moteurs respectifs.

8. Groupe intégré de deux moteurs électriques selon la revendication 6 ou 7, **caractérisé en ce qu'**au moins le stator (S1) d'un moteur (1) est sensiblement protégé de l'extérieur par une configuration cupulaire cylindrique du bord annulaire respectif (34) de l'élément de protection latéral respectif (31).

9. Groupe intégré de deux moteurs électriques selon l'une quelconque des revendications précédentes, **caractérisé en ce que** lesdits moteurs électriques (1, 2) sont des moteurs à aimant permanent.

10. Sèche-linge de type à condensation, soit à chargement frontal soit à chargement par le dessus, comprenant :
- un tambour rotatif (40),
- un premier conduit d'air de séchage (41) destiné à faire circuler un premier flux d'air chaud suivant un modèle en circuit fermé à travers ledit tambour rotatif et à travers un condenseur approprié (42),
- un premier ventilateur (44) qui est adapté pour faire circuler le flux d'air chaud de séchage à travers ledit premier conduit (41),
- un deuxième conduit (45) qui est adapté pour faire circuler un deuxième flux d'air ambiant ou refroidi à travers ledit condenseur (42),
- un deuxième ventilateur (46) qui est adapté pour faire circuler ledit deuxième flux d'air de refroidissement à travers ledit deuxième conduit,
- lesdits premier et deuxième ventilateurs et ledit tambour rotatif (40) étant entraînés en rotation par des moyens d'entraînement appropriés,
**caractérisé en ce que** :
- lesdits moyens d'entraînement comprennent un groupe intégré de deux moteurs (1, 2) selon l'une au moins des revendications précédentes.

11. Sèche-linge de type à condensation selon la revendication 10, **caractérisé en ce que** chacune desdites deux sections (9a, 9b) dudit premier arbre est raccordée à un ventilateur respectif desdits premier et deuxième ventilateurs (44, 46), et **en ce que** ledit deuxième arbre creux (4) est raccordé à des moyens adaptés pour entraîner en rotation ledit tambour rotatif (40).

12. Sèche-linge de type à condensation selon l'une quelconque des revendications précédentes, **caractérisé en ce qu'**il est doté de moyens de commande adaptés pour commander lesdits deux moteurs électriques (1, 2) et ledit actionneur électromagnétique (14), en utilisation, de façon totalement indépendante l'un de l'autre.

13. Sèche-linge de type à condensation selon la revendication 12, **caractérisé en ce que** :
- ladite deuxième section d'arbre (9b) est raccordée audit deuxième ventilateur (46)
- et lesdits moyens de commande sont adaptés pour faire tourner ledit premier moteur (1), ou pour actionner ledit actionneur électromagnétique (14), selon le cas, de manière à désaccoupler la deuxième section d'arbre (9b) de ladite première section d'arbre (9a) pendant au moins la phase initiale du processus de séchage du linge.
